(19) **Europäisches Patentamt**
**European Patent Office**
**Office européen des brevets**

(11) **EP 4 512 077 B1**

(12) **EUROPEAN PATENT SPECIFICATION**

(45) Date of publication and mention
of the grant of the patent:
**04.03.2026 Bulletin 2026/10**

(21) Application number: **23724968.5**

(22) Date of filing: **18.04.2023**

(51) International Patent Classification (IPC):
*H04N 19/117* (2014.01)   *G06T 5/00* (2024.01)
*H04N 19/46* (2014.01)   *H04N 19/70* (2014.01)
*H04N 19/85* (2014.01)   *H04N 19/86* (2014.01)

(52) Cooperative Patent Classification (CPC):
**H04N 19/117; H04N 19/46; H04N 19/70;**
**H04N 19/85; H04N 19/86**

(86) International application number:
**PCT/US2023/018941**

(87) International publication number:
**WO 2023/205144 (26.10.2023 Gazette 2023/43)**

(54) **METADATA-AIDED REMOVAL OF FILM GRAIN**

METADATENGESTÜTZTES ENTFERNEN VON FILMKORN

SUPPRESSION DE GRAIN DU FILM ASSISTÉE PAR MÉTADONNÉES

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **19.04.2022 EP 22168812**
**19.04.2022 US 202263332332 P**

(43) Date of publication of application:
**26.02.2025 Bulletin 2025/09**

(73) Proprietor: **Dolby Laboratories Licensing**
**Corporation**
**San Francisco, CA 94103 (US)**

(72) Inventors:
• **SU, Guan-Ming**
**San Francisco, California 94103 (US)**
• **YIN, Peng**
**San Francisco, California 94103 (US)**
• **HUANG, Tsung-Wei**
**San Francisco, California 94103 (US)**

(74) Representative: **Dolby International AB**
**Patent Group Europe**
**77 Sir John Rogerson's Quay**
**Block C**
**Grand Canal Docklands**
**Dublin, D02 VK60 (IE)**

(56) References cited:
EP-A2- 1 231 778   WO-A2-2004/105250
WO-A2-2006/057994   KR-A- 20190 098 634
US-A- 6 067 125   US-A1- 2006 183 275
US-A1- 2020 045 231

• MCCARTHY (DOLBY) S ET AL: "AHG9: Errata
and editorial clarifications for AVC and HEVC
film grain characteristics SEI message
semantics", no. JVET-T0075, 14 October 2020
(2020-10-14), XP030293508, Retrieved from the
Internet <URL:https://jvet-experts.org/
doc_end_user/documents/20_Teleconference/
wg11/JVET-T0075-v2.zip JVET-T0075-v2.docx>
[retrieved on 20201014]
• DUBOIS E ET AL: "NOISE REDUCTION IN IMAGE
SEQUENCES USING MOTION-COMPENSATED
TEMPORAL FILTERING", IEEE TRANSACTIONS
ON COMMUNICATIONS, IEEE SERVICE CENTER,
PISCATAWAY, NJ. USA, vol. COM-32, no. 7, 1 July
1984 (1984-07-01), pages 826 - 831,
XP001024707, ISSN: 0090-6778

**Description**

1. Cross-Reference to Related Applications

This application claims priority of the following priority applications: U.S. provisional application 63/332,332 (reference: D22003USP01), filed 19 April 2022, and European application 22168812.0 (reference: D22003EP), filed 19 April 2022

2. Field of the Disclosure

Various example embodiments relate to image and video processing and, more specifically but not exclusively, to the digital film-grain technology.

3. Background

On physical film, film grain is the random physical texture made from small metallic silver particles found on processed photographic celluloid. In digital photography, the visual and artistic effects of film grain can be simulated by adding a digital grain pattern to a digital image after the image is taken. Because digital film grain may be difficult to encode, e.g., due to its (quasi)random nature, a video encoder may typically remove the film grain during encoding and then, during playback, the corresponding video decoder may synthesize the film grain and add it back in.

WO2006057994A2 describes that simulation of a block of film grain for addition to a block of an image occurs by first establishing at least one parameter at least in part in accordance with an attribute of the image block. At least one at least one block of film grain is simulated from at least one film grain pattern generated in accordance with the at least one parameter. In particular, ce film grain pattern is generated using a bit accurate technique.

MCCARTHY ET AL: "AHG9: Errata and editorial clarifications for AVC and HEVC film grain characteristics SEI message semantics", 20th JVET MEETING, proposes editorial corrections and clarifications for the semantics of the film grain characteristics (FGC) SEI message in the current versions of AVC and HEVC.

WO2004105250A2 describes that to simulate film grain in a compressed video signal, a decoder receives a message containing information that contains a set of one or more parameters, each specifying certain attribute associated with the film grain. For example, one of the parameters will specify the model used to simulate the film grain, whereas other parameters each specify a particular factor associated with that model. Upon receipt of the message, the decoder selects the model, and simulates the film grain for addition to the video signal following decompression.

KR20190098634A discloses an apparatus for encoding to perform encoding in consideration of post processing of an electronic device. The apparatus comprises: a communication unit; a memory in which a noise model is stored; and a processor obtaining a prediction block for encoding corresponding to a current block of an input image based on the noise model, performing quantization for a differential signal obtained based on the difference between the current block and prediction block, obtaining an encoding image signal by encoding the quantized differential signal, and outputting noise meta data corresponding to the prediction block and stream including the encoding image signal to a decoding device through the communication unit.

BRIEF SUMMARY OF SOME SPECIFIC EMBODIMENTS

The invention is set out in the appended claims.

BRIEF DESCRIPTION OF THE DRAWINGS

Other aspects, features, and benefits of various disclosed embodiments will become more fully apparent, by way of example, from the following detailed description and the accompanying drawings, in which:

FIG. 1 depicts an example process for a video delivery pipeline, in which at least some embodiments can be practiced.

FIG. 2 is a block diagram illustrating a video encoder that can be used in the process of FIG. 1.

FIG. 3 is a block diagram illustrating a video decoder that can be used in the process of FIG. 1 according to an embodiment.

FIG. 4 is a processing flowchart illustrating a spatial-domain grain removal process that can be implemented in the video decoder of FIG. 3 according to an embodiment.

FIG. 5 graphically illustrates example film-grain removal results possibly achievable using a scaled Gaussian filter in the video decoder of FIG. 3 according to first embodiments.

FIG. 6 graphically illustrates example film-grain removal results possibly achievable using a scaled Gaussian filter in the video decoder of FIG. 3 according to second embodiments.

FIG. 7 graphically illustrates example film-grain removal results possibly achievable using a scaled Gaussian filter in the video decoder of FIG. 3 according to third embodiments.

FIG. 8 graphically illustrates example film-grain removal results possibly achievable using a scaled Gaussian filter in the video decoder of FIG. 3 according to fourth embodiments.

FIG. 9 is a processing flowchart illustrating a temporal-domain grain removal process that can be implemented in the video decoder of FIG. 3 according to an embodiment.

FIG. 10 shows an example of an intensity-dependent scaling factor that can be accommodated in the video decoder of FIG. 3 using signal preprocessing according to an embodiment.

DETAILED DESCRIPTION

This disclosure and aspects thereof can be embodied in various forms, including hardware, devices or circuits controlled by computer-implemented methods, computer program products, computer systems and networks, user interfaces, and application programming interfaces; as well as hardware-implemented methods, signal processing circuits, memory arrays, application specific integrated circuits (ASICs), field programmable gate arrays (FPGAs), and the like. The foregoing is intended solely to give a general idea of various aspects of the present disclosure.

In the following description, numerous details are set forth, such as optical device configurations, timings, operations, and the like, in order to provide an understanding of one or more aspects of the present disclosure. It will be readily apparent to one skilled in the art that these specific details are merely exemplary and not intended to limit the scope of this application.

Moreover, while the present disclosure focuses mainly on examples in which the various circuits are used in digital projection systems, it will be understood that these are merely examples. It will further be understood that the disclosed systems and methods can be used in any device in which there is a need to project light, for example, cinema, consumer, and other commercial projection systems, heads-up displays, virtual reality displays, and the like. Disclosed systems and methods may be implemented in additional display devices, such as with an OLED display, an LCD display, a quantum dot display, or the like.

Herein, the term "dynamic range" (DR) may relate to a capability of the human visual system (HVS) to perceive a range of intensity (e.g., luminance, luma) in an image, e.g., from darkest grays (blacks) to brightest whites (highlights). In this sense, DR relates to a 'scenereferred' intensity. DR may also relate to the ability of a display device to adequately and/or approximately render an intensity range of a particular breadth. In this sense, DR relates to a 'display-referred' intensity. Unless a particular sense is explicitly specified to have particular significance at any point in the description herein, it should be inferred that the term may be used in either sense, e.g., interchangeably.

Herein, the term "high dynamic range" (HDR) relates to a DR breadth that spans some 14-15 orders of magnitude of the human visual system (HVS). In practice, the DR over which a human may simultaneously perceive an extensive breadth in intensity range may be somewhat truncated, in relation to HDR. As used herein, the terms "enhanced dynamic range" (EDR) or "visual dynamic range" (VDR) may individually or interchangeably relate to the DR that is perceivable within a scene or image by a human visual system that includes eye movements, allowing for some light adaptation changes across the scene or image.

In practice, images comprise one or more color components (e.g., luma Y and chroma Cb and Cr), wherein each color component is represented by a precision of n-bits per pixel (e.g., n=8). Using linear luminance coding, images where $n \leq 8$ are considered as images of standard dynamic range, while images where n>8 (e.g., color 24-bit JPEG images) may be considered as images of enhanced dynamic range. EDR and HDR images may also be stored and distributed using high-precision (e.g., 16-bit) floating-point formats, such as the OpenEXR file format developed by Industrial Light and Magic.

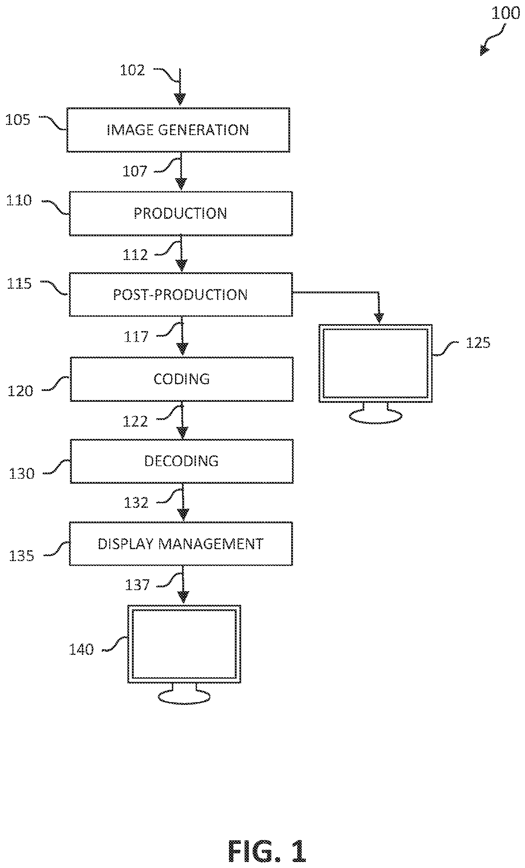

Herein, the term "metadata" relates to any auxiliary information that is transmitted as part of the coded bitstream and assists a decoder in rendering the corresponding image(s). For television broadcasting and video streaming, video metadata may be used to provide side information about specific video and audio streams or files. Metadata can either be embedded directly into the video or be included as a separate file within a container, such as the MP4 or MKV. Metadata may include information about the entire video stream or file or about specific video frames. Created by cameras, encoders, and other video-processing elements (e.g., see 115, 120, FIG. 1), metadata may include but are not limited to timestamps, video resolution, digital film-grain parameters, color space or gamut information, reference display parameters, auxiliary signal parameters, file size, closed captioning, audio languages, ad-insertion points, color spaces, error messages, and so on. Additional examples of metadata pertinent to the disclosed embodiments are described herein below.

Many consumer desktop displays may support luminance of 200 to 300 cd/m$^2$ or nits. Many consumer HDTVs range from 300 to 500 nits, with new models reaching 1000 nits (cd/m$^2$). Such conventional displays typify a lower dynamic range (LDR), also referred to as a standard dynamic range (SDR), in relation to HDR or EDR. As the availability of HDR content grows due to advances in both image-capture equipment (e.g., cameras) and HDR displays (e.g., the PRM-4200 professional reference monitor from Dolby Laboratories), HDR content may be color graded and displayed on HDR displays that support higher dynamic ranges (e.g., from 1,000 nits to 5,000 nits or more).

**Video Coding According to Example Embodiments**

FIG. 1 depicts an example process of a video delivery pipeline (100), showing various stages from video capture to video-content display according to an embodiment. A sequence of video frames (102) may be captured or generated using an image-generation block (105). The video frames (102) may be digitally captured (e.g., by a digital camera) or generated by a computer (e.g., using computer animation) to provide video data (107). Alternatively, the video frames (102) may be captured on film by a film camera. Then, the film may be translated into a digital format to provide the video data (107).

In a production phase (110), the video data (107) may be edited to provide a video production stream (112). The data of the video production stream (112) may then be provided to a processor (or one or more processors, such as a central processing unit, CPU) at a post-production block (115) for post-production editing. The post-production editing of the block (115) may include, e.g., adjusting or modifying colors or brightness in particular areas of an image to enhance the image quality or achieve a particular appearance for the image in accordance with the video creator's creative intent. This part of post-production editing is sometimes referred to as "color timing" or "color grading." Other editing (e.g., scene selection and sequencing, image cropping, addition of computer-generated visual special effects, etc.) may be performed at the block (115) to yield a "final" version (117) of the production for distribution. During the post-production editing (115), video images may be viewed on a reference display (125).

Following the post-production (115), video data of the final version (117) may be delivered to a coding block (120) for being delivered downstream to decoding and playback devices, such as television sets, set-top boxes, movie theaters, and the like. In some embodiments, the coding block (120) may include audio and video encoders, such as those defined by the ATSC, DVB, DVD, Blu-Ray, and other delivery formats, to generate a coded bitstream (122). Some methods described herein below may be performed by the corresponding processor at the coding block (120). In a receiver, the coded bitstream (122) is decoded by a decoding unit (130) to generate a corresponding decoded signal (132) representing a copy or a close approximation of the signal (117). The receiver may be attached to a target display (140) that may have somewhat or completely different characteristics than the reference display (125). In such cases, a display management block (135) may be used to map the decoded signal (132) to the characteristics of the target display (140) by generating a display-mapped signal (137). Some methods described herein below may be performed by the decoding unit (130) and/or display management block (135). Depending on the embodiment, the decoding unit (130) and display management block (135) may include individual processors or may be based on a single integrated processing unit.

As already indicated above, film grain may provide an effective way to improve the look of digital video in terms of aesthetic feeling and sharpness. Film grain may also be used to alleviate banding artifacts and/or to mask compression artifacts. Film grain may be added in the post-production (115). Conventionally, film grain is removed at the encoder at the coding block (120), and the resulting "clean" video signal is compressed, e.g., using a lossy video-compression code, to generate the coded bitstream (122). At the corresponding decoder, the coded bitstream (122) is decoded, and film grain is added back using the decoding unit (130) to generate a decoded signal (132) that includes film grain.

In some use cases, film grain may not be removed at the encoder in the coding block (120) or, alternatively, a basic film grain may be added thereat to the "clean" video signal prior to video compression. This type of processing may be performed, e.g., to ensure that the film-grain feature is present in the coded bitstream (122) and to enable "simpler" decoders to provide film-grain containing playback even though the decoder itself may not be capable of synthesizing and overlaying film grain. However, if the decoder has the film-grain-synthesizing capability, then the basic film grain of the coded bitstream (122) may be removed at the decoder using the decoding unit (130) and further video processing may be applied thereat. In some use cases, such further video processing may include adding another (e.g., adaptive) type of film grain in accordance with the viewing environment corresponding to the target display (140).

In one example of the above-indicated use cases, the base layer of bitstream (122) carries an SDR signal, with SDR-specific film grain injected therein. If the received bitstream is to be converted to HDR, then the SDR-specific film grain may be removed at the decoding unit (130) and replaced by a different (e.g., HDR-specific) film grain.

In another example of the above-indicated use cases, bitstream (122) may have film grain injected therein to reduce the above-mentioned banding artifacts. If the decoding unit (130) operates to convert an 8-bit based profile to a 10-bit based profile, then the corresponding processing may include removing the existing film grain and then applying a de-banding filter. The resulting filtered signal may further be processed to, *inter alia,* insert a different film grain.

Example embodiments disclosed herein are generally directed at performing film-grain removal from the received bitstream (122) at the decoding unit (130). Some embodiments may rely only on spatial-domain grain-removal processing or only on temporal-domain grain-removal processing. Some other embodiments may rely on both spatial-domain and temporal-domain grain-removal processing. In an example embodiment, the grain-removal processing is performed using metadata of the received bitstream (122), which may provide useful information about the film grain of the received bitstream, thereby facilitating the grain-removal processing at the decoding unit (130).

In an example embodiment, the pipeline blocks (115, 120) may generate film grain for the coded bitstream (122) using a reproducible film-grain model, wherein a random or pseudo-random seed and a selected intensity-modulation function may be used. The seed information and model's film-grain parameters may be transmitted as metadata in bitstream 122. As a result, the decoder at the decoding unit (130) may be provided with certain specifics of the stream's film-grain pattern, which the decoder may beneficially utilize to efficiently generate an accurate approximation of the corresponding "clean" (i.e., grain-free) video signal, e.g., as described in more detail below.

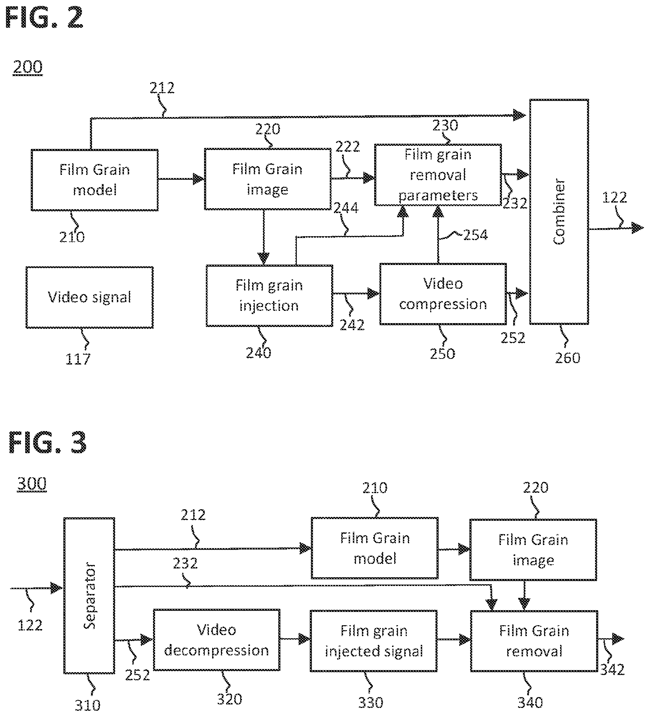

FIG. 2 is a block diagram illustrating a video encoder (200). The encoder (200) can be used, e.g., to implement the coding block (120) of the pipeline (100) (also see FIG. 1). For illustration purposes and without any implied limitations, FIG. 2 uses the reference numerals (117) and (122) to better indicate an example relationship between the block diagrams of FIGs. 1 and 2. A person of ordinary skill in the pertinent art will readily understand that alternative arrangements for the encoder (200) within the coding block (120) are also possible.

As shown in FIG. 2, the encoder (200) operates to convert an input video signal (117) into an output bitstream (122). In this embodiment, the input video signal (117) does not have film grain encoded therein. The processing performed in the encoder (200) causes the corresponding video signal encoded in the output bitstream (122) to have digital film grain therein. In addition, the encoder (200) typically causes the output bitstream (122) to carry metadata corresponding to and/or characterizing the digital film grain.

For each image of the output bitstream (122), the encoder (200) uses a film-grain model (210) to generate a film-grain image (220). The film-grain model (210) is also typically "known" to a corresponding video decoder (e.g., see FIG. 3). Specific parameter values of the film-grain model (210) used by the encoder (200) in the generation of the film-grain image (220) may typically be communicated to the corresponding video decoder as film-grain-model metadata (212). As such, the corresponding video decoder can compute an exact copy of the film-grain image (220) (also see FIG. 3).

A film-grain injection block (240) of the encoder (200) operates to modulate, pixel-by-pixel, the noise strength of the film-grain image (220) based on the corresponding intensity of the input video signal (117). The resulting modulated film-grain image is then added to the host image to produce a corresponding film-grain-injected image. A sequence (242) of such film-grain-injected images is compressed in a video-compression module (250) of the encoder (200), thereby producing a compressed-video bitstream (252). The video-compression module (250) may perform lossy compression according to a video compression standard. A metadata generator (230), with the parameter inputs (222, 244, 254) indicated in FIG. 2, generates film-grain-removal metadata (232) comprising one or more parameters that can be used for efficient and effective film-grain removal at the corresponding video decoder. Examples of such metadata (232) are described in more detail below. A combiner module (260) operates to appropriately combine the metadata (212, 232) and the compressed video bitstream (252) to generate the output bitstream (122).

FIG. 3 is a block diagram illustrating a video decoder (300) according to an embodiment. The decoder (300) can be used, e.g., to implement the decoding unit (130) of the pipeline (100) (also see FIG. 1). The decoder (300) operates to convert the received bitstream (122) into a video signal (342). In an example embodiment, the video signal (342) has the above-described digital film grain substantially fully removed therefrom and, as such, may represent a relatively accurate approximation of the source video signal (117) (also see FIG. 2).

The decoder (300) comprises a separator module (310) configured to appropriately extract the above-described metadata (212, 232) and the compressed video bitstream (252) from the received bitstream (122). As already indicated above, the film-grain model (210) is "known" to (e.g., stored in a memory of) the decoder (300). This knowledge, together with the film-grain-model metadata (212) extracted by the separator module (310), enables the decoder (300) to recompute the film-grain image (220) as indicated in FIG. 3. The film-grain image (220) may be referred to as a simulated film-grain image.

The decoder (300) further comprises a video-decompression module (320) configured to appropriately decompress the compressed video bitstream (252) received from the separator module (310), thereby generating a decompressed video signal (330). Note that, if lossy compression is used at the video-compression module (250) of the encoder (200), then the decompressed video signal (330) may differ from the sequence (242). Since the film-grain injection performed at the film-grain injection block (240) of the encoder (200) involves modulation of the film-grain image (220) by luma, the actually injected film grain may not be determined from the decompressed video signal (330) and may instead be estimated. This estimation is performed by a film-grain removal module (340) of the decoder (300) and generally relies on the recomputed film-grain image (220), the metadata (232) extracted by the separator module (310) from the received bitstream (122), and the decompressed video signal (330). Example embodiments of the film-grain removal method implemented in the film-grain removal module (340) are described in more detail below.

**Film-Grain Injection Process**

Let us denote the $i^{\text{th}}$ pixel of the $j^{\text{th}}$ host image frame as $s_{ji}$, and the corresponding film-grain pixel as $n_{ji}$. The luma modulation function is denoted as $f()$. The modulation function, $f(s_{ji})$, may typically be a non-linear function of the host signal $s_{ji}$. The film-grain injected pixel, $v_{ji}$, can be expressed as:

$$v_{ji} = s_{ji} + f(s_{ji}) \cdot n_{ji} \qquad (1)$$

The film-grain injected signal after video compression, e.g., by the video-compression module (250) of the encoder (200), is denoted as:

$$\tilde{v}_{ji} = g(v_{ji}) \qquad (2)$$

where g() denotes the compression function. The compressed signal without the film grain is denoted as:

$$\tilde{s}_{ji} = g(s_{ji}) \qquad (3)$$

As already indicated above, a film-grain removal process may rely only on spatial-domain processing, only on temporal-domain processing, or on a combination of spatial-domain and temporal-domain processing. Example embodiments of the film-grain removal process are described in more detail below.

**Film-Grain Removal Process: Spatial Domain**

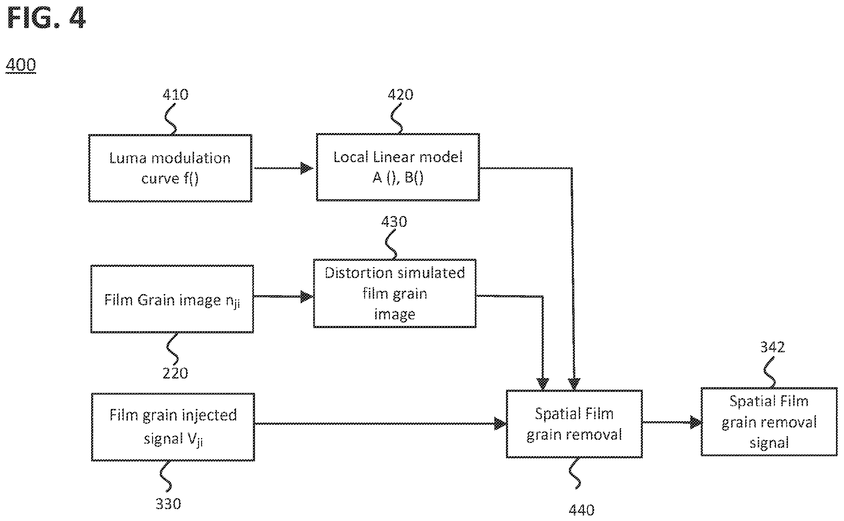

FIG. 4 is a processing flowchart (400) illustrating a spatial-domain grain-removal process that can be implemented in the decoder (300) according to an embodiment. The process (400) comprises a processing block (440), wherein the decompressed video signal (330) is transformed into the output video signal (342) (also see FIG. 3). The processing block (440) also receives inputs from processing blocks (420, 430), which aid the transformation process. In general, the grain-removal process (400) is directed at recovering the host signal $s_{ji}$ from the signal obtained by applying video decompression to the compressed film-grain injected signal $\tilde{v}_{ji}$ (also see Eqs. (1)-(2)). Depending on the embodiment, the host signal actually recovered at the decoder (300) may be a copy of the host signal used for generating the bitstream (122) at the encoder (200) or may be a relatively accurate estimate of that host signal.

The input provided to the processing block (440) by the processing block (420) is based on the above-mentioned luma modulation function $f()$ (410). Pertinent parameters representing the function $f()$ may be supplied to the decoder (300), e.g., as part of the film-grain model (210) and/or the metadata (212) (also see FIGs. 2, 3). In an example embodiment, the processing block (420) operates to compute local first-order polynomial approximations of the function $f()$, which may then be used in the grain-removal processing implemented in the processing block (440), e.g., as described in more detail below.

The input provided to the processing block (440) by the processing block (430) is an estimate of the distorted film-grain image (220), wherein the distortion is typically caused by the serial application of the lossy compression (250) and the corresponding decompression (320) (also see FIGs. 2, 3). Examples of how to compute such estimates are described in more detail below.

Lossless Compression

When the video-compression module (250) of the encoder (200) applies lossless compression, the function $g()$ defined by Eqs. (2)-(3) is effectively a bypass function having the following properties:

$$v_{ji} = g(v_{ji}) \qquad (4)$$

$$s_{ji} = g(s_{ji}) \qquad (5)$$

In some embodiments, the luma modulation function $f()$ can be linear. These embodiments are described in reference to Eqs. (6)-(8). In some other embodiments, the luma modulation function $f()$ can be nonlinear. The latter embodiments are described in reference to Eqs. (9)-(18).

A linear function $f()$ can be expressed as follows:

$$f(s_{ji}) = a + b \cdot s_{ji} \quad (6)$$

where $a$ and $b$ are constants. Using Eq. (6), Eq. (1) can be rewritten as follows:

$$v_{ji} = s_{ji} + (a + b \cdot s_{ji}) \cdot n_{ji} = (1 + b \cdot n_{ji})s_{ji} + a \cdot n_{ji} \quad (7)$$

The original host signal $s_{ji}$, can be recovered using the following equation obtained by rearranging Eq. (7):

$$s_{ji} = \frac{v_{ji} - a \cdot n_{ji}}{1 + b \cdot n_{ji}} \quad (8)$$

Since the constants $a$ and $b$ can be communicated to the decoder (300), e.g., as part of the metadata (212), the film-grain removal module (340) can be programmed to recover the original host signal $s_{ji}$ using Eq. (8).

When the luma modulation function $f()$ is non-linear, a close-form solution for the film-grain removal, such as that of Eq. (8), may not be available. However, in view of Eq. (8), an approximate solution can be constructed based on local linear approximations of the function $f()$ expressed as follows:

$$f(x) \approx a_x + b_x \cdot x \quad (9)$$

where $a_x$ and $b_x$ are the (local) coefficients that depend on $x$. More specifically, for each input codeword $x$, one can compute the local linear function via a first-order polynomial regression based on the neighboring codewords $x \in [x_L, x_H]$ and the corresponding modulation-function output $y = f(x)$. The range boundaries $x_L$ and $x_H$ may be determined, e.g., using Eqs. (10)-(11):

$$x_L = clip3(x - d, 0, 2^B - 1) \quad (10)$$

$$x_H = clip3(x + d, 0, 2^B - 1) \quad (11)$$

where $B$ is the bit depth of the video signal; and $d$ is the neighborhood range. In some embodiments, the value of $d$ can be selected to be close to the maximum film-grain size.

Let us present the local first-order polynomial parameters $(a_x, b_x)$ as a vector $m_x$:

$$m_x = \begin{bmatrix} a_x \\ b_x \end{bmatrix} \quad (12)$$

Then, let us rearrange the input and output of the function $f()$ using the following matrix $S_x$ and vector $v_x$:

$$S_x = \begin{bmatrix} 1 & x_L \\ \vdots & \vdots \\ 1 & x_H \end{bmatrix} \quad (13)$$

$$v_x = \begin{bmatrix} f(x_L) \\ \vdots \\ f(x_H) \end{bmatrix} \quad (14)$$

An approximate solution, $m_x^{opt}$ for $(a_x, b_x)$ can then be obtained using a suitable least mean squares (LMS) algorithm applied to the following equation:

$$m_x^{opt} = ((S_x)^T S_x)^{-1} ((S_x)^T v_x) \qquad (15)$$

where $T$ in the superscript means transposed. Note that Eqs. (12)-(15) enable, for each possible value, $x \in [0, 2^B - 1]$, to have the corresponding pair of parameters $(a_x, b_x)$. In an example embodiment, Eqs. (12)-(15) can be used to build a look-up table (LUT), wherein a sub-table $A(x)$ maps $x$ to $a_x$, and a sub-table $B(x)$ maps $x$ to $b_x$.

In analogy with Eq. (7), Eq. (1) can now be approximated by Eq. (16) as follows:

$v_{ji} \approx s_{ji} + (A(s_{ji}) + B(s_{ji}) \cdot s_{ji}) \cdot n_{ji} = (1 + B(s_{ji}) \cdot n_{ji}) s_{ji} + A(s_{ji}) \cdot n_{ji}$ (16) An approximate value of the original host signal $s_{ji}$ can then be obtained via the following equation obtained by rearranging Eq. (16):

$$s_{ji} \approx \frac{v_{ji} - A(s_{ji}) \cdot n_{ji}}{1 + B(s_{ji}) \cdot n_{ji}} \qquad (17)$$

Note that the right-hand part of Eq. (17) relies on the values of $s_{ji}$, which may not be available at the decoder. As a result, further approximation is needed to adapt Eq. (17) for use in the program of the decoder (300). In one example embodiment, such further approximation can be obtained by making the following substitution: $s_{ji} \approx v_{ji}$. Qualitatively, this substitution can be justified by the fact that the injected film grain is a relatively weak signal, and the differences between $s_{ji}$ and $v_{ji}$ are typically small. After the substitution, Eq. (17) becomes Eq. (18):

$$s_{ji} \approx \frac{v_{ji} - A(v_{ji}) \cdot n_{ji}}{1 + B(v_{ji}) \cdot n_{ji}} \qquad (18)$$

Since the values of $v_{ji}$ are typically available at the decoder, Eq. (18) can be used in the program of the decoder (300) to obtain estimates of the host image frame $s_{ji}$.

Lossy Compression

When the video-compression module (250) of the encoder (200) applies lossy compression, the above-described film-grain removal process adapted for lossless compression may not produce optimal results. For example, it can be noted that lossy compression may cause signal distortions, e.g., both the host video signal and the film-grain component may lose some higher frequency components thereof. Since the above-described "lossless" film-grain removal does not account for such compression-caused distortions, the residual film grain can be quite noticeable if such removal is applied in conjunction with lossy compression.

According to the invention, to address this problem, Eq. (18) can be further modified to arrive at Eq. (19):

$$\hat{s}_{ji} \approx \frac{\tilde{v}_{ji} - A(\tilde{v}_{ji}) \cdot \tilde{n}_{ji}}{1 + B(\tilde{v}_{ji}) \cdot \tilde{n}_{ji}} \qquad (19)$$

where $\hat{s}_{ji}$ denotes the estimated compressed signal; the film-grain injected signal after video compression, $\tilde{v}_{ji}$, is given by Eq. (2); and the compressed film-grain component, $\tilde{n}_{ji}$, is given by Eq. (20):

$$\tilde{n}_{ji} = g(n_{ji}) \qquad (20)$$

Note that Eq. (19) relies on the values of $\tilde{n}_{ji}$ which need to be estimated at the decoder. According to example embodiments disclosed herein, such estimation can be performed using a suitable digital filter. Such a digital filter may be, e.g., a Gaussian filter, a finite impulse response (FIR) filter, a guided filter, or another suitable filter. Several illustrative filter embodiments are described below, by way of example. Based on the provided description, a person of ordinary skill in the pertinent art will be able to make and use additional filter embodiments without any undue experimentation.

According to the invention, the values of $\tilde{n}_{ji}$ are estimated using a scaled Gaussian filter, G(), expressed as follows:

$$\tilde{n}_{ji} = k_j \cdot G(n_{ji}, \sigma_j) \qquad (21)$$

where $k_j$ is a scaling factor; and $\sigma_j$ is the filter's spectral width. The parameters $k_j$ and $\sigma_j$ can be included in the metadata (232).

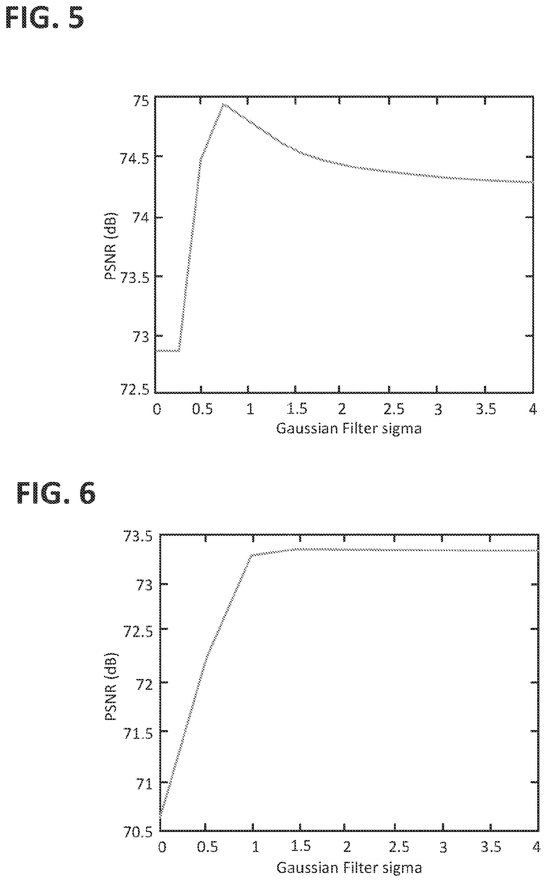

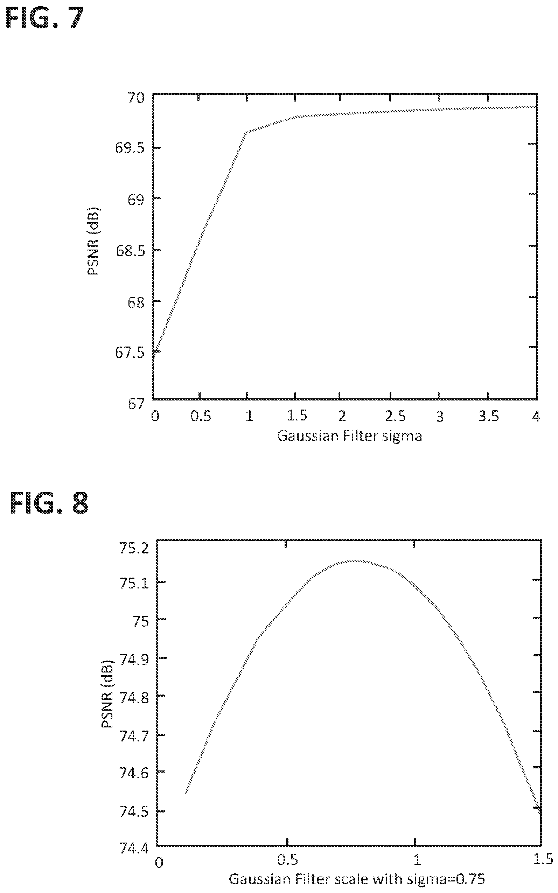

FIGs. 5-8 graphically illustrate example film-grain removal results that can be achieved using the scaled Gaussian filter of Eq. (21). More specifically, each of FIGs. 5-7 graphically shows the dependence of the peak signal-to-noise ratio (PSNR) on the parameter $\sigma_j$ at different respective bit rates. FIG. 5 corresponds to the bit rate of 20 Mbps. FIG. 6 corresponds to the bit rate of 10 Mbps. FIG. 7 corresponds to the bit rate of 5 Mbps. The PSNR values corresponding to $\sigma_j = 0$ represent results, wherein no filter is applied. FIG. 8 graphically shows the PSNR dependence on the parameter $k_j$ for $\sigma_j = 0.75$ and the bit rate of 20 Mbps. Collectively, the data shown in FIGs. 5-8 indicate that a PSNR gain of up to ~2.5 dB is achievable according to these embodiments.

According to another non-claimed example, the values of $\tilde{n}_{ji}$ are estimated using an FIR filter implemented in accordance with Eq. (22):

$$\ddot{n}_{ji} = \sum_{(i+k)\in\boldsymbol{\omega}_{ji}} w_{jk} \cdot n_{j,i+k} \qquad (22)$$

where the index $k$ is in the range $[-\frac{B^2-1}{2}, \frac{B^2-1}{2}]$; $w_{jk}$ are the filter coefficients; and $\omega_{ji}$ denotes a $B$x$B$ pixel block having its center at the $i$-th pixel.

The optimal filter coefficients $w_{jk}$ can be obtained, e.g., as follows. At the encoder (200), the values of $\tilde{v}_{ji}$ and $s_{ji}$ are known and can be expressed as follows:

$$\tilde{v}_{ji} \approx g(s_{ji}) + \left(A(s_{ji}) + B(s_{ji}) \cdot s_{ji}\right) \cdot g(n_{ji}) \qquad (23)$$

Rearrangement of Eq. (23) provides Eq. (24):

$$g(n_{ji}) \approx \frac{\tilde{v}_{ji} - g(s_{ji})}{A(s_{ji}) + B(s_{ji}) \cdot s_{ji}} \qquad (24)$$

Using the approximation $g(s_{ji}) \approx s_{ji}$, Eq. (24) is transformed into Eq. (25), which expresses the target signal of the filtered results:

$$g(n_{ji}) \approx \frac{\tilde{v}_{ji} - s_{ji}}{A(s_{ji}) + B(s_{ji}) \cdot s_{ji}} \qquad (25)$$

The problem of optimizing the FIR filter coefficients can then be formulated as follows:

$$\{w_{jk}^{opt}\} = \underset{\{w_{jk}\}}{\operatorname{argmin}} \sum_i \left\| g(n_{ji}) - \ddot{n}_{ji} \right\|^2 \qquad (26)$$

An approximate solution to the problem of Eq. (26) can be obtained using an LMS method, e.g., as follows. First, let us arrange sets of the filter coefficients $w_{jk}$ in a vector form:

$$\boldsymbol{w}_j = \begin{bmatrix} w_{j,-\frac{B^2-1}{2}} \\ \vdots \\ w_{j,\frac{B^2-1}{2}} \end{bmatrix} \qquad (27)$$

The film-grain pixel values of the neighborhood of the $i$-th pixel's (with value $n_{ji}$) can similarly be represented in a vector form, $\omega_{ji}$, and such vectors $\omega_{ji}$ of the $P$ neighbor pixels can be stacked to form a corresponding matrix, $\Omega_j$, expressed as follows:

$$\Omega_j = \begin{bmatrix} \boldsymbol{\omega}_{j,o} \\ \vdots \\ \boldsymbol{\omega}_{j,P-1} \end{bmatrix} \qquad (28)$$

The corresponding target reference signal, also in a vector form, is given by Eq. (29):

$$\boldsymbol{g}_j = \begin{bmatrix} g(n_{j0}) \\ \vdots \\ g(n_{j,P-1}) \end{bmatrix} \tag{29}$$

An approximate solution, $\boldsymbol{w}_j^{opt}$, for the FIR-filter coefficients can be obtained using an LMS algorithm applied to the following equation:

$$\boldsymbol{w}_j^{opt} = \left( (\boldsymbol{\Omega}_j)^T \boldsymbol{\Omega}_j \right)^{-1} ((\boldsymbol{\Omega}_j)^T \boldsymbol{g}_j) \tag{30}$$

The FIR-filter coefficients obtained in this manner from Eq. (30) can then be used in Eq. (22) to compute $\breve{n}_{ji}$. Finally, Eq. (31) can be used to compute the estimated compressed signal $\hat{s}_{ji}$:

$$\hat{s}_{ji} \approx \frac{\tilde{v}_{ji} - A(\tilde{v}_{ji}) \cdot \breve{n}_{ji}}{1 + B(\tilde{v}_{ji}) \cdot \breve{n}_{ji}} \tag{31}$$

The PSNR gain of FIR-filter embodiments generally increases with an increase of the filter size. However, this improvement may be achieved at the cost of an additional implementation overhead.

With respect to the guided-filter embodiments, we observe that the most noticeable residual film-grain noise may be in the image areas having relatively flat and/or smooth image patterns therein. For example, the pixel values in a flat area may be approximately constant, with local variations being primarily due to the added or incompletely/imperfectly removed film grain. As a preliminary observation, we note that, in such flat areas, the estimated compressed film grain, $\hat{n}_{ji} \triangleq g(n_{ji})$, can be approximated using a linear model based on the decoded film-grain-injected signal, $\tilde{v}_{ji}$. In an example embodiment, such a model can be expressed as follows:

$$\hat{n}_{ji} = \alpha_{j,\Phi_{ji}} \cdot \tilde{v}_{ji} + \beta_{j,\Phi_{ji}} \tag{32}$$

where $(\alpha_{j,\Phi_{ji}}, \beta_{j,\Phi_{ji}})$ are the local linear-model constants within a $B{\times}B$ local pixel area, $\Phi_{ji}$, of an image subjected to lossy compression.

Herein, the difference between the original film-grain pattern $(n_{ji})$ and the reconstructed film grain $(\hat{n}_{ji})$ is denoted as $\tau_{ji}$. Therefore, the following is true:

$$\hat{n}_{ji} = n_{ji} + \tau_{ji} \tag{33}$$

Applying an LMS method in a similar manner to that described above, one can find optimal linear-model constants using Eq. (34):

$$(\alpha_{j,\Phi_{ji}}^{opt}, \beta_{j,\Phi_{ji}}^{opt}) = \underset{(\alpha_{j,\Phi_{ji}}, \beta_{j,\Phi_{ji}})}{\operatorname{argmin}} \sum_{i \epsilon \Phi_{ji}} (\|\hat{n}_{ji} - n_{ji}\|^2 + \epsilon(\alpha_{j,\Phi_{ji}})^2) =$$

$$= \underset{(\alpha_{j,\Phi_{ji}}, \beta_{j,\Phi_{ji}})}{\operatorname{argmin}} \sum_{i \epsilon \Phi_{ji}} (\|\alpha_{j,\Phi_{ji}} \cdot \tilde{v}_{ji} + \beta_{j,\Phi_{ji}} - n_{ji}\|^2 + \epsilon(\alpha_{j,\Phi_{ji}})^2) \tag{34}$$

where $\varepsilon$ is a regularization parameter. An approximate solution to Eq. (34) is given by Eqs. (35), (36):

$$\alpha_{j,\Phi_{ji}}^{opt} = \frac{\frac{1}{B^2} \sum_{i \epsilon \Phi_{ji}} (\tilde{v}_{ji} \cdot n_{ji}) - \mu_{ji} \cdot \bar{n}_{ji}}{(\sigma_{ji})^2 + \epsilon} \tag{35}$$

$$\beta_{j,\Phi_{ji}}^{opt} = \bar{n}_{ji} - \alpha_{j,\Phi_{ji}}^{opt} \cdot \mu_{ji} \tag{36}$$

where $\bar{n}_{ji} = \frac{1}{B^2} \sum_{i \in \Phi_{ji}} (n_{ji})$ ; and $\mu_i$ and $(\sigma_i)^2$ are the mean and variance of $\tilde{v}_{ji}$ in $\Phi i$.

Next, one can compute the average of the local linear-model constants in a neighborhood, e.g., as follows:

$$\bar{\alpha}_{j,\Phi_{ji}} = \frac{1}{B^2} \sum_{i \in \Phi_{ji}} \left( \alpha_{j,\Phi_{ji}} \right) \qquad (37)$$

$$\bar{\beta}_{j,\Phi_{ji}} = \frac{1}{B^2} \sum_{i \in \Phi_{ji}} \left( \beta_{j,\Phi_{ji}} \right) \qquad (38)$$

Substituting these values into Eq. (32), one obtains:

$$\hat{n}_{ji} = \bar{\alpha}_{j,\Phi_{ji}} \cdot \tilde{v}_{ji} + \bar{\beta}_{j,\Phi_{ji}} \qquad (39)$$

In an example, the computations corresponding to Eq. (39) may use a guided-filter function, $GF()$, known to persons of ordinary skill in the pertinent art. The function $GF()$ can be accelerated using an integral image, which is also known to persons of ordinary skill in the pertinent art. Using this function, the 2D image, $\overline{N}_j$, consisting of the $\hat{n}_{ji}$ values of the $j$-th frame can be computed as follows:

$$\widehat{N}_j = GF\left(\widetilde{V}_j, N_j, B\right) \qquad (40)$$

whereas $\tilde{V}_j$ denotes the 2D image consisting of the $\tilde{v}_{ji}$ values of the $j$-th frame; and $N_j$ denotes the 2D image consisting of the $n_{ji}$ values of the $j$-th frame. The neighborhood size $B$ is a parameter of this method. As already indicated above, the value of $B$ may be related to the film-grain size. For example, for a larger film grain, larger $B$ values may be more suitable. The linear-model constants are computed using the film-grain-injected image $\{\tilde{v}_{ji}\}$ and the film-grain model $\{n_{ji}\}$, e.g., as outlined above. Finally, Eq. (41) can be used to compute the estimated compressed signal $\hat{s}_{ji}$:

$$\hat{s}_{ji} \approx \frac{\tilde{v}_{ji} - A(\tilde{v}_{ji}) \cdot \hat{n}_{ji}}{1 + B(\tilde{v}_{ji}) \cdot \hat{n}_{ji}} \qquad (41)$$

It should be noted here that, in general, guided-filter embodiments may fall in between the Gaussian-filter embodiments and the FIR-filter embodiments in terms of the PSNR gain. However, because the guided-filter embodiments work best for the flat and smooth image areas, the improvement that is subjectively perceivable by the viewer may typically be more significant under the guided-filter approach.

**Film-Grain Removal Process: Temporal Domain**

In an example embodiment, film grain may have zero-mean characteristics, meaning that the image with film grain and the original image have the same DC value. As a result, the averaged pixel value for a given pixel location within a static scene tends to average out the film grain back to "zero." Certain embodiments of temporal-domain grain removal disclosed herein are designed to take advantage of this property to remove the film grain.

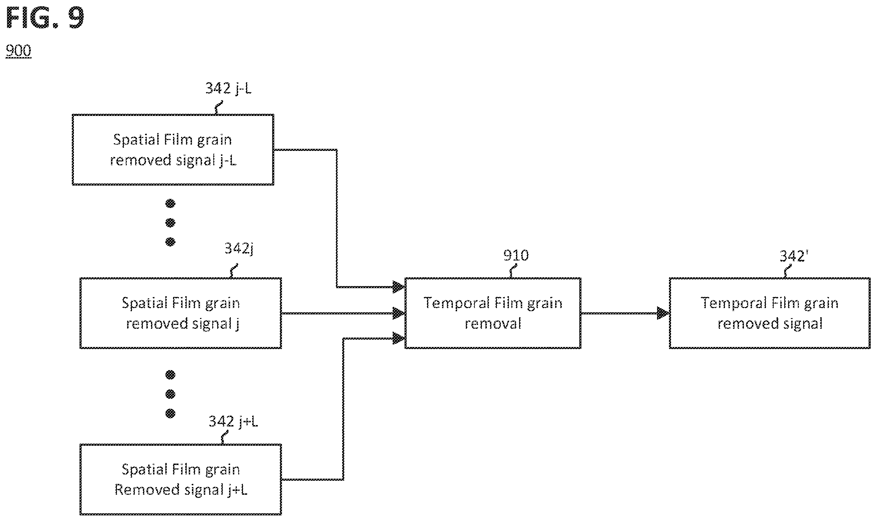

FIG. 9 is a processing flowchart (900) illustrating a temporal-domain grain-removal process that can be implemented in the decoder (300) according to an embodiment. For illustration purposes and without any implied limitations, the process (900) is shown and described as receiving, as an input thereto, a sequence of images ($342_{j-L}$, ..., $342_j$, ..., $342_{j+L}$) produced by the process (400). However, embodiments of the process (900) are not so limited. For example, in another embodiment, the process (900) may operate directly on a sequence of the images (330) (also see FIG. 3). The sliding-window length, L, may depend on the maximum amplitude of the film-grain pattern. In general, larger L values may be more beneficial when the maximum amplitude is higher. In operation, a processing block (910) of the process (900) transforms the input sequence of the images (342) (FIG. 4) or of the images (330) (FIG. 3) into the corresponding output sequence of the images (342'), e.g., as described below, wherein the film-grain pattern in the output sequence is less noticeable than in the input sequence.

According to an example embodiment, for the $i$-th spatially filtered pixel of the $j$-th frame ($342_j$), the temporal-domain filtering of the process (900) within a temporal sliding window $[w_{ji}^L, w_{ji}^H]$ provides the following signals $\hat{s}_{ji}^T$ for the sequence (342'):

$$\hat{s}_{ji}^{T} = \frac{1}{w_{ji}^{H} - w_{ji}^{L} + 1} \sum_{j \in [w_{ji}^{L}, w_{ji}^{H}]} \hat{s}_{ji} \qquad (42)$$

where the values of $w_{ji}^{L}$ and $w_{ji}^{H}$ may be adaptively determined based on the two thresholds, $\tau_{ji}^{A}$ and $\tau_{ji}^{B}$, which are derived from the metadata parameters $\tau^{A}$ and $\tau^{B}$ as follows:

$$\tau_{ji}^{A} = f(\hat{s}_{ji}) \cdot \tau^{A} \qquad (43)$$

$$\tau_{ji}^{B} = f(\hat{s}_{ji}) \cdot \tau^{B} \qquad (44)$$

A motivation behind the use of the function $f()$ for modulating the thresholds $\tau_{ji}^{A}$ and $\tau_{ji}^{B}$ is that the injected film-grain strength is also modulated using the function $f()$ (see, e.g., Eq. (1)).

The value of $w_{ji}^{L}$ can be determined, e.g., by iteratively checking the condition expressed by Inequality (45) for the sequence ($342_{j-1}$, $342_{j-2}$, ...):

$$\left( \left| \hat{s}_{ji} - \hat{s}_{j-d,i} \right| \leq \tau_{ji}^{A} \right) \&\& \left( \left( \sum_{k=1,\dots,d} \left| \hat{s}_{ji} - \hat{s}_{j-k,i} \right| \right) \leq \tau_{ji}^{B} \right) \qquad (45)$$

For each iteration, the parameter $d$ is increased. If Inequality (45) is not satisfied and the previous iterative value of $d$ satisfies this inequality, then $w_{ji}^{L} = j - d$. To reduce the search time in multiple frames and to reduce the frame buffer, the sliding-window size may be upper limited by the left buffer size $D_{L}$ and the available frames at the beginning of the video sequence, for example, as follows:

$$w_{ji}^{L} = \max \left\{ j - d, j - D_{L}, 0 \right\} \qquad (46)$$

The value of $w_{ji}^{H}$ can similarly be determined by iteratively checking the condition expressed by Inequality (47) for the sequence ($342_{j+1}$, $342_{j+2}$, ...):

$$\left( \left| \hat{s}_{ji} - \hat{s}_{j+d,i} \right| \leq \tau_{ji}^{A} \right) \&\& \left( \left( \sum_{k=1,\dots,d} \left| \hat{s}_{ji} - \hat{s}_{j+k,i} \right| \right) \leq \tau_{ji}^{B} \right) \qquad (47)$$

For each iteration, the parameter $d$ is increased. If the condition (47) is not met and the previous value of $d$ satisfies this condition, then $w_{ji}^{H} = j + d$. To reduce the search time in multiple frames and to reduce the frame buffer, the window size may be upper limited by the right buffer size $D_{R}$ and the available frames at the end of the video sequence, for example, as follows:

$$w_{ji}^{R} = \min \left\{ j + d, j + D_{R}, F - 1 \right\} \qquad (48)$$

where $F$ is the number of video frames in the sequence.

Once the values of $w_{ji}^{L}$ and $w_{ji}^{H}$ are determined as indicated above, the temporal averaging of the processing block (910) can be performed in accordance with Eq. (42). Note that the above-described temporal averaging is a pixel-based operation. The buffer sizes $D_{L}$ and $D_{R}$ can be provided to the decoder (300) as part of the metadata (232).

## Preprocessing of Signals Corresponding to Alternative Film-Grain Models

Some embodiments may be adapted to be compatible with alternative film-grain models, i.e., film-grain models that are different from the above-described film-grain model. Such embodiments generally rely on signal preprocessing to provide a preprocessed signal compatible with the above-described grain-removal processes. As a non-limiting example of such preprocessing, we describe herein example preprocessing applicable to an MPEG Film Grain Model, which is defined in the corresponding standard(s).

An example MPEG film-grain model is a piecewise model according to the pixel intensity value. In each piece, different film-grain-model parameters may be used, e.g., different cutoff frequencies, different scaling factors to scale the film grain, etc. Let us assume that there are $T$ such pieces in the $j$-th frame, and the partition points for those pieces are denoted as $\{p_j^t\}$. The film-grain image in the $t$-th piece is denoted as $\{n_{ji}^t\}$, and the scaling factor for the $t$-th piece is denoted as $a_j^t$.

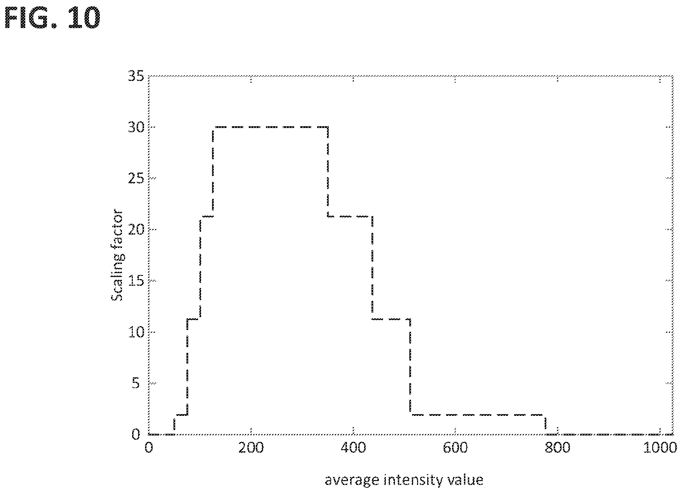

FIG. 10 shows an example of an intensity-dependent scaling factor that can be accommodated using the above-mentioned preprocessing according to an embodiment. It can be noticed in FIG. 10 that the scaling factor can take several discrete values from the range between zero and thirty. In this case, the film-grain-injected pixel, $v_{ji}$, can be expressed as:

$$v_{ji} = s_{ji} + a_j^t \cdot n_{ji}^t \qquad\qquad (49)$$

where

$$p_j^t \leq s_{ji} < p_j^{t+1}.$$

Comparing Eq. (49) with Eq. (1), one can notice that the piecewise scaling factor $(a_j^t)$ may be considered as a special use case of the non-linear modulation function $f(s_{ji})$ discussed above. Therefore, the methodology described above in reference to the non-linear modulation function $f(s_{ji})$ is applicable to this special use case. The corresponding LUTs, $A(s_{ji})$ and $B(s_{ji})$, also see Eqs. (12)-(15), can be computed, e.g., as follows:

$$A\left(s_{ji}\right) = a_j^t \qquad \text{where } p_j^t \leq s_{ji} < p_j^{t+1} \qquad (50)$$

$$B\left(s_{ji}\right) = 0 \qquad \text{where } p_j^t \leq s_{ji} < p_j^{t+1} \qquad (51)$$

On the other hand, the different cutoff frequencies of the noise pattern in each piece adds an additional dimension that needs to be addressed in the preprocessing. Herein, we describe embodiments directed at constructing the full film-grain image, $\{n_{ji}\}$, from multiple film-grain pieces $\{n_{ji}^t\}$. Once the full film-grain image is constructed through preprocessing, the subsequent grain removal may rely on one or more of the above-described grain-removal processes.

Towards building the full film-grain image, consider the $i$-th pixel of $v_{ji}$ (see Eq. (1)) at the decoder (300). If the $i$-th pixel value is not near one of the boundaries of different intensity pivot points (e.g., see FIG. 10), e.g., the corresponding $v_{ji}$ value is in the range $p_j^t + \Delta < v_{ji} < p_j^{t+1} - \Delta$, then the film-grain value for the full film-grain image can be in accordance with Eq. (52):

$$n_{ji} = n_{ji}^t \qquad\qquad (52)$$

Herein, $\Delta$ denotes the film-grain amplitude, which is typically relatively small.

However, when the pixel value is relatively close to the piece boundary, e.g., $p_j^t - \Delta \leq v_{ji} \leq p_j^t + \Delta$, then the following ambiguity needs to be resolved:

$$v_{ji} = s_{ji}^{(\alpha)} + a_j^{t-1} \cdot n_{ji}^{t-1} \qquad (53)$$

$$v_{ji} = s_{ji}^{(\beta)} + a_j^t \cdot n_{ji}^t \qquad (54)$$

Herein, the values of $a_j^{t-1} \cdot n_{ji}^{t-1}$ and $a_j^t \cdot n_{ji}^t$ can be determined based the received bitstream and metadata; and $v_{ji}$ denotes the decoded pixel value. However, the determination of the host pixel value for $s_{ji}$ has to deal with two different options, i.e., $s_{ji}^{(\alpha)}$ or $s_{ji}^{(\beta)}$, defined by Eqs. (53) and (54).

In an example embodiment, the choice between the two possible options, $s_{ji}^{(\alpha)}$ or $s_{ji}^{(\beta)}$, can be made by analyzing preprocessing results in a local neighborhood/patch ($\Omega_i$) around the $i$-th pixel. More specifically, the results corresponding to the correctly chosen alternative are expected to be smoother (e.g., exhibit lower residual film-grain noise) than the results corresponding to the incorrect one of the two alternatives. Based on this observation, an example embodiment is configured to compute the standard deviation for each of the two alternatives in such a patch. The standard deviation is expected that to be smaller for the correctly chosen one of the two alternatives.

Eqs. (55)-(56) provide mathematical expressions for the computation of the above-mentioned standard deviations, $\omega_i^{(\alpha)}$ and $\omega_i^{(\beta)}$, as follows:

$$\omega_i^{(\alpha)} = \frac{1}{|\Omega_i|}\sum_{i\in\Omega_i}\left(s_{ji}^{(\alpha)} - \frac{1}{|\Omega_i|}\sum_{i\in\Omega_i}s_{ji}^{(\alpha)}\right)^2 \qquad (55)$$

$$\omega_i^{(\beta)} = \frac{1}{|\Omega_i|}\sum_{i\in\Omega_i}\left(s_{ji}^{(\beta)} - \frac{1}{|\Omega_i|}\sum_{i\in\Omega_i}s_{ji}^{(\beta)}\right)^2 \qquad (56)$$

The computed standard deviations $\omega_i^{(\alpha)}$ and $\omega_i^{(\beta)}$ can then be used to select the host-image pixel values for $s_{ji}$ and the film-grain pixel values $n_{ji}$ as follows:

$$s_{ji} = \begin{cases} s_{ji}^{(\alpha)} & if\ \omega_i^{(\alpha)} \leq \omega_i^{(\beta)} \\ s_{ji}^{(\beta)} & if\ \omega_i^{(\alpha)} > \omega_i^{(\beta)} \end{cases} \qquad (57)$$

$$n_{ji} = \begin{cases} n_{ji}^{t-1} & if\ \omega_i^{(\alpha)} \leq \omega_i^{(\beta)} \\ n_{ji}^{t} & if\ \omega_i^{(\alpha)} > \omega_i^{(\beta)} \end{cases} \qquad (58)$$

By carrying out the above-described calculations on a pixel-by-pixel basis, a full film-grain image $\{n_{ji}\}$ can be built, according to the decoded values, $v_{ji}$, and partition points, $\{p_j^t\}$. The preprocessing results, including the LUTs $A(s_{ji})$, $B(s_{ji})$ (see Eqs. (50), (51)) in some embodiments, can then be used for further processing in accordance with a suitable embodiment of the grain-removal process described above.

According to an example disclosed above, e.g., in the summary section and/or in reference to any one or any combination of some or all of FIGs. 1-10, provided is an apparatus, comprising a video decoder (e.g., 130, FIG. 1) that comprises: an input interface (e.g., 310, FIG. 3) to receive a coded bitstream (e.g., 122, FIGs. 1, 3) including a compressed video bitstream (e.g., 252, FIG. 3) and metadata (e.g., 212, 232, FIG. 3), the compressed video bitstream having encoded therein a sequence of images containing digital film grain, the metadata including one or more parameters corresponding to the digital film grain; and a processor (e.g., 320, 340, FIG. 3) configured to: (A) decompress (e.g., at 320, FIG. 3) the compressed video bitstream to generate a respective decompressed representation (e.g., 330, FIG. 3) of each of the images, each of the decompressed representations including a respective host-image component and a respective film-grain component; (B) compute, based on the metadata, a respective estimate of the respective film-grain component for each of the decompressed representations; and (C) remove (e.g., at 340, FIG. 3) the respective estimate from the respective decompressed representation to produce a corresponding estimate (e.g., 342, FIG. 4) of the respective host-image component.

In some examples of the above apparatus, the processor is further configured to: compute (e.g., at 210, FIG. 3), based on the metadata, a film-grain image (e.g., 220, FIG. 3); and compute the respective estimate using the film-grain image.

In some embodiments of any of the above apparatus, the processor is further configured to adjust (e.g., at 430, FIG. 4) the film-grain image to account for distortions caused by at least one of video compression and decompression.

According to the invention, in the above apparatus, the processor is configured to adjust the film-grain image using a Gaussian filter (e.g., illustrated in FIGs. 5-8).

In some examples not falling under the present invention, of any of the above apparatus, the processor is configured to adjust the film-grain image using a finite-impulse-response filter (e.g., in accordance with Eqs. (22)-(31)).

In some examples, not falling under the present invention, of any of the above apparatus, the processor is configured to adjust the film-grain image using a guided filter (e.g., in accordance with Eqs. (32)-(41)).

In some examples, not falling under the present invention, of any of the above apparatus, the processor is further configured to: compute, for patches of image pixels, standard deviations corresponding to estimated host-image pixel values (e.g., in accordance with Eqs. (55)-(56)); and compute the film-grain image based on the standard deviations (e.g., in accordance with Eq. (58)).

In some examples, not falling under the present invention, of any of the above apparatus, the processor is further configured to: compute (e.g., at 420, FIG. 4) first-order polynomial approximations of a nonlinear luma modulation function (e.g., $f()$, Eq. (1)); and compute the respective estimate using said approximations.

In some examples, not falling under the present invention, of any of the above apparatus, the processor is further configured to use the metadata to compute said approximations.

According to the invention, the processor is configured to compute the respective estimate using a precomputed look-up table (e.g., 420, FIG. 4) having stored therein parameters of first-order polynomial approximations of a nonlinear luma modulation function (e.g., $f()$, Eq. (1)).

In some embodiments of any of the above apparatus, the processor is further configured to temporally average (e.g., at 910, FIG. 9; in accordance with Eq. (42)) a sequence of the respective decompressed representations using a plurality of temporal sliding windows, each of the temporal sliding windows corresponding to a respective image-frame pixel, at least some of the temporal sliding windows having different respective lengths (e.g., selected in accordance with Eqs. (45), (47)).

In some embodiments of any of the above apparatus, the processor is further configured to select the lengths of the temporal sliding windows based on the metadata (e.g., $\tau^A$ and $\tau^B$, Eqs. (43), (44)).

In some examples, not falling under the present invention, of any of the above apparatus, the apparatus further comprises a video encoder (e.g., 120, FIG. 1) that comprises: an output interface (e.g., 260, FIG. 2) to output the coded bitstream for the video encoder; and a video-compression module (e.g., 250, FIG. 2) to generate the compressed video bitstream using lossy compression according to a video compression standard.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary is made herein. In particular, use of the singular articles such as "a," "the," "said," etc. should be read to recite one or more of the indicated elements unless a claim recites an explicit limitation to the contrary.

Some embodiments can be embodied in the form of methods and apparatuses for practicing those methods. Some embodiments can also be embodied in the form of program code recorded in tangible media, such as magnetic recording media, optical recording media, solid state memory, floppy diskettes, CD-ROMs, hard drives, or any other non-transitory machine-readable storage medium, wherein, when the program code is loaded into and executed by a machine, such as a computer, the machine becomes an apparatus for practicing the patented invention(s). Some embodiments can also be embodied in the form of program code, for example, stored in a non-transitory machine-readable storage medium including being loaded into and/or executed by a machine, wherein, when the program code is loaded into and executed by a machine, such as a computer or a processor, the machine becomes an apparatus for practicing the patented invention(s). When implemented on a general-purpose processor, the program code segments combine with the processor to provide a unique device that operates analogously to specific logic circuits.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required.

Conversely, the terms "directly coupled," "directly connected," etc., imply the absence of such additional elements.

As used herein in reference to an element and a standard, the term compatible means that the element communicates with other elements in a manner wholly or partially specified by the standard, and would be recognized by other elements as sufficiently capable of communicating with the other elements in the manner specified by the standard. The compatible element does not need to operate internally in a manner specified by the standard.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

As used in this application, the terms "circuit," "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1.  A machine-implemented method of removing digital film grain from video data, the method comprising:

    receiving a coded bitstream (122) including a compressed video bitstream (252) and metadata (212, 232), the compressed video bitstream having encoded therein a sequence of images containing digital film grain, the metadata comprising film-grain-model metadata (212) and film-grain-removal metadata (232), the film-grain-model metadata (212) including one or more parameters corresponding to the digital film grain;

    decompressing (320) the compressed video bitstream to generate a respective decompressed representation $\tilde{v}_{ji}$ (330) of each of the images, wherein $\tilde{v}_{ji}$ denotes the $i^{\text{th}}$ pixel of the $j^{\text{th}}$ film-grain injected image frame after video compression extracted from the compressed video bitstream (252), each of the decompressed representations including a respective host-image component $s_{ji}$ and a respective film-grain component $n_{ji}$, wherein $s_{ji}$ denotes the $i^{\text{th}}$ pixel of the $j^{\text{th}}$ host-image frame without film grain, and wherein $n_{ji}$ denotes the $i^{\text{th}}$ pixel of the $j^{\text{th}}$ film grain image frame;

    determining an estimate of a compressed film-grain component, $n_{ji}$, for each of the film-grain injected pixels after video compression, $\tilde{v}_{ji}$, the respective estimate being determined by calculating:

    $$\tilde{n}_{ji} = k_j \cdot G\left(n_{ji}, \sigma_j\right),$$

    wherein:

**EP 4 512 077 B1**

$\tilde{n}_{ji}$ denotes the estimate of the $i$th pixel of the $j$th film-grain image frame after video compression,

$k_j$ denotes a scaling factor included in the film-grain-removal metadata (232),

$G()$ denotes a scaled Gaussian filter available at the video decoder (300),

$n_{ji}$ denotes the $i$th pixel of the $j$th film grain image frame retrieved from a known film grain model (210) available at the video decoder (300) and by using the film-grain-model metadata (212),

$\sigma_j$ denotes the spectral width of the scaled Gaussian filter included in the film-grain-removal metadata (232); and

determining an estimate (342) of the respective host-image component, $s_{ji}$, for each of the film-grain injected pixels after video compression, $\tilde{v}_{ji}$, the respective estimate being determined by calculating:

$$\hat{s}_{ji} = \frac{\tilde{v}_{ji} - A(\tilde{v}_{ji}) \cdot \tilde{n}_{ji}}{1 + B(\tilde{v}_{ji}) \cdot \tilde{n}_{ji}},$$

wherein: $\hat{s}_{ji}$ denotes the estimate of the $i$th pixel of the $j$th host-image frame without film grain, and $A()$ and $B()$ represent coefficients of a local linear approximation ,$f(x) \approx a_x + b_x{}^*x$, of a luma modulation function used to modulate the film-grain image onto the respective host-image and retrieved from the known film-grain model (210) available at the video decoder (300) or from the film-grain-model metadata (212), wherein a sub-table $A(x)$ of a LUT maps $x$ to $a_x$, and a sub-table B($x$) of the LUT maps $x$ to $b_x$, where ($a_x$, $b_x$) are local first-order polynomial parameters.

2. The method of claim 1, further comprising temporally averaging a sequence of the respective decompressed representations using a plurality of temporal sliding windows, each of the temporal sliding windows corresponding to a respective image-frame pixel, at least some of the temporal sliding windows having different respective lengths.

3. The method of claim 1 or claim 2, wherein the compressed video bitstream has been generated using lossy compression according to a video compression standard.

4. A video delivery system capable of digital film-grain removal, the system comprising a video decoder (300) that comprises:

an input interface (310) to receive a coded bitstream (122) including a compressed video bitstream (252) and metadata (212, 232), the compressed video bitstream having encoded therein a sequence of images containing digital film grain, the metadata (212, 232) comprising film-grain-model metadata (212) and film-grain-removal metadata (232), the film-grain-model metadata (212) including one or more parameters corresponding to the digital film grain; and
a processor (320, 340) configured to perform the method of any one of claims 1-3.

5. The video delivery system of claim 4, further comprising a video encoder that comprises:

an output interface to output the coded bitstream for the video encoder; and
a video-compression module to generate the compressed video bitstream using lossy compression according to a video compression standard.

6. A non-transitory machine-readable medium, having encoded thereon program code, wherein, when the program code is executed by a machine, the machine performs operations comprising the method of any one of claims 1-3.

**Patentansprüche**

1. Maschinenimplementiertes Verfahren zum Entfernen von digitalem Filmkorn aus Videodaten, wobei das Verfahren Folgendes umfasst:

Empfangen eines codierten Bitstroms (122), der einen komprimierten Videobitstrom (252) und Metadaten (212, 232) einschließt, wobei der komprimierte Videobitstrom eine darin codierte Sequenz von Bildern aufweist, die digitalen Filmkorn enthält, wobei die Metadaten Filmkornmodell-Metadaten (212) und Filmkornentfernungs-Metadaten (232) umfassen, wobei die Filmkornmodell-Metadaten (212) einen oder mehrere Parameter einschließen, die dem digitalen Filmkorn entsprechen;

Dekomprimieren (320) des komprimierten Videobitstroms, um eine entsprechende dekomprimierte Darstellung $\tilde{v}_{ji}$ (330) jedes der Bilder zu erzeugen, wobei $\tilde{v}_{ji}$ das $i^{-te}$ Pixel des $j^{-ten}$ Filmkorn-eingefügten Bildrahmens nach der Videokomprimierung bezeichnet, der aus dem komprimierten Videobitstrom (252) extrahiert wurde, wobei jede der dekomprimierten Darstellungen eine jeweilige Host-Bildkomponente $s_{ji}$ und eine jeweilige Filmkornkomponente $n_{ji}$ einschließt, wobei $s_{ji}$ das $i^{-te}$ Pixel des $j^{-ten}$ Host-Bildrahmens ohne Filmkorn bezeichnet und wobei $n_{ji}$ das $i^{-te}$ Pixel des $j^{-ten}$ Filmkorn-Bildrahmens bezeichnet;

Bestimmen einer Schätzung der komprimierten Filmkornkomponente $\tilde{n}_{ji}$ für jedes der nach der Videokompression eingefügten Filmkornpixel $\tilde{v}_{ji}$, wobei die jeweilige Schätzung durch folgende Berechnung bestimmt wird:

$$\tilde{n}_{ji} = k_j \cdot G(n_{ji}, \sigma_j),$$

wobei:

$\tilde{n}_{ji}$ bezeichnet die Schätzung des $i^{-ten}$ Pixels des $j^{-ten}$ Filmkorn-Bildrahmens nach der Videokompression,

$k_j$ bezeichnet einen Skalierungsfaktor, der in den Filmkornentfernungs-Metadaten (232) eingeschlossen ist,

G() bezeichnet einen skalierten Gauß-Filter, der im Videodecoder (300) verfügbar ist.

$n_{ji}$ bezeichnet das $i^{-te}$ Pixel des $j^{-ten}$ Filmkorn-Bildrahmens, das aus einem bekannten Filmkornmodell (210), das im Videodecoder (300) verfügbar ist, und unter Verwendung der Filmkornmodell-Metadaten (212) abgerufen wurde,

$\sigma_j$ bezeichnet die spektrale Breite des skalierten Gauß-Filters, der in den Filmkornentfernungs-Metadaten (232) eingeschlossen ist; und

Bestimmen einer Schätzung (342) der jeweiligen Host-Bildkomponente $\hat{s}_{ji}$ für jedes der nach der Videokompression eingefügten Filmkornpixel $\tilde{v}_{ji}$, wobei die jeweilige Schätzung durch folgende Berechnung bestimmt wird:

$$\hat{s}_{ji} = \frac{\tilde{v}_{ji} - A(\tilde{v}_{ji}) \cdot \tilde{n}_{ji}}{1 + B(\tilde{v}_{ji}) \cdot \tilde{n}_{ji}}$$

wobei:

$\hat{s}_{ji}$ bezeichnet die Schätzung des $j^{-ten}$ Pixels des $j^{-ten}$ Host-Bildrahmens ohne Filmkorn, und

A() und B() sind Koeffizienten einer lokalen linearen Approximation $f(x) \approx a_x + b_x * x$ einer Luma-Modulationsfunktion, die verwendet wird, um das Filmkornbild auf das jeweilige Host-Bild zu modulieren und aus dem bekannten Filmkornmodell (210), das im Videodecoder (300) verfügbar ist, oder aus den Filmkornmodell-Metadaten (212) abgerufen wird, wobei eine Untertabelle $A(x)$ einer LUT x auf $a_x$ abbildet und eine Untertabelle $B(x)$ der LUT x auf $b_x$ abbildet, wobei $(a_x, b_x)$ lokale Polynomparameter erster Ordnung sind.

2. Verfahren nach Anspruch 1, weiter umfassend das zeitliche Mitteln einer Sequenz der jeweiligen dekomprimierten Darstellungen unter Verwendung einer Vielzahl von zeitlichen Gleitfenstern, wobei jedes der zeitlichen Gleitfenster einem jeweiligen Bildrahmenpixel entspricht, wobei mindestens einige der zeitlichen Gleitfenster unterschiedliche Längen aufweisen.

3. Verfahren nach Anspruch 1 oder Anspruch 2, wobei der komprimierte Videobitstrom unter Verwendung verlustbehafteter Komprimierung gemäß einem Videokomprimierungsstandard erzeugt wurde.

4. Videowiedergabesystem, das zur digitalen Filmkornentfernung fähig ist, wobei das System einen Videodecoder (300) umfasst, der Folgendes umfasst:

eine Eingabeschnittstelle (310) zum Empfangen eines codierten Bitstroms (122), der einen komprimierten Videobitstrom (252) und Metadaten (212, 232) einschließt, wobei der komprimierte Videobitstrom eine darin codierte Sequenz von Bildern aufweist, die digitalen Filmkorn enthält, wobei die Metadaten (212, 232) Filmkornmodell-Metadaten (212) und Filmkornentfernungs-Metadaten (232) umfassen, wobei die Filmkornmodell-Metadaten (212) einen oder mehrere Parameter einschließen, die dem digitalen Filmkorn entsprechen; und einen Prozessor (320, 340), der so konfiguriert ist, dass er das Verfahren nach einem der Ansprüche 1-3 durchführt.

**5.** Videowiedergabesystem nach Anspruch 4, weiter umfassend einen Video-Encoder, der Folgendes umfasst:

eine Ausgabeschnittstelle zum Ausgeben des codierten Bitstroms für den Video-Encoder; und
ein Videokompressionsmodul zum Erzeugen des komprimierten Videobitstroms unter Verwendung verlustbehafteter Komprimierung gemäß einem Videokompressionsstandard.

**6.** Nichtflüchtiges maschinenlesbares Medium, das darauf codierten Programmcode aufweist, wobei, wenn der Programmcode durch eine Maschine ausgeführt wird, die Maschine Operationen durchführt, umfassend das Verfahren nach einem der Ansprüche 1-3.

**Revendications**

**1.** Procédé mis en œuvre par machine d'élimination de grain de film numérique à partir de données vidéo, le procédé comprenant :

la réception d'un flux binaire codé (122) incluant un flux binaire vidéo compressé (252) et des métadonnées (212, 232), le flux binaire vidéo compressé présentant, encodée en son sein, une séquence d'images contenant du grain de film numérique, les métadonnées comprenant des métadonnées de modèle de grain de film (212) et des métadonnées d'élimination de grain de film (232), les métadonnées de modèle de grain de film (212) incluant un ou plusieurs paramètres correspondant au grain de film numérique ;
la décompression (320) du flux binaire vidéo compressé pour générer une représentation décompressée respective $\tilde{v}_{ji}$ (330) de chacune des images, dans lequel $\tilde{v}_{ji}$ désigne le $i^{-ième}$ pixel de la $j^{-ième}$ trame d'image à injection de grain de film après compression vidéo extrait du flux binaire vidéo compressé (252), chacune des représentations décompressées incluant une composante d'image hôte respective $s_{ji}$ et une composante de grain de film respective $n_{ji}$, dans lequel $s_{ji}$ désigne le $i^{-ième}$ pixel de la $j^{-ième}$ trame d'image hôte sans grain de film, et dans lequel $n_{ji}$ désigne le $i^{-ième}$ pixel de la $j^{-ième}$ trame d'image avec grain de film ;
déterminer une estimation d'une composante de grain de film compressée, $\tilde{n}_{ji}$, pour chacun des pixels à injection de grain de film après compression vidéo, $\tilde{v}_{ji,}$ l'estimation respective étant déterminée en calculant :

$$\tilde{n}_{ji} = k_j \cdot G(n_{ji}, \sigma_j),$$

dans lequel :

$\tilde{n}_{ji}$ désigne l'estimation du pixel $i^{-ième}$ de la $j^{-ième}$ trame d'image à grain de film après compression vidéo,
$k_j$ désigne un facteur d'échelle inclus dans les métadonnées d'élimination de grain de film (232),
G() désigne un filtre gaussien mis à l'échelle disponible au niveau du décodeur vidéo (300),
$n_{ji}$ désigne le $i^{-ième}$ pixel de la $j^{-ième}$ trame d'image à grain de film récupérée à partir d'un modèle de grain de film connu (210) disponible au niveau du décodeur vidéo (300) et en utilisant les métadonnées de modèle de grain de film (212),
$\sigma_j$ désigne la largeur spectrale du filtre gaussien mis à l'échelle inclus dans les métadonnées d'élimination de grain de film (232) ; et

déterminer une estimation (342) de la composante d'image hôte respective, $\hat{s}_{ji}$, pour chacun des pixels à injection de grain de film après compression vidéo, $\tilde{v}_{ji,}$ l'estimation respective étant déterminée en calculant :

$$\hat{s}_{ji} = \frac{\tilde{v}_{ji} - A(\tilde{v}_{ji}) \cdot \tilde{n}_{ji}}{1 + B(\tilde{v}_{ji}) \cdot \tilde{n}_{ji}}$$

dans lequel

$\hat{s}_{ji}$ désigne l'estimation du $i^{-ième}$ pixel de la $j^{-ième}$ trame d'image hôte sans grain de film, et
A() et B() représentent les coefficients d'une approximation linéaire locale, $f(x) \approx a_x + b_x * x$, d'une fonction de modulation de luminance utilisée pour moduler l'image de grain du film sur l'image hôte respective et récupérée à partir du modèle de grain du film connu (210) disponible au niveau du décodeur vidéo (300) ou à partir des métadonnées de modèle de grain de film (212), dans lequel une sous-table $A(x)$ d'une LUT mappe $x$ par rapport à $a_{x,}$ et une sous-table $B(x)$ de la LUT mappe $x$ par rapport à $b_{x}$, $(a_x, b_x)$ étant des paramètres

polynomiaux de premier ordre locaux.

2. Procédé selon la revendication 1, comprenant en outre un moyennage temporel d'une séquence des représentations décompressées respectives à l'aide d'une pluralité de fenêtres glissantes temporelles, chacune des fenêtres glissantes temporelles correspondant à un pixel de trame d'image respectif, au moins certaines des fenêtres glissantes temporelles présentant des longueurs respectives différentes.

3. Procédé selon la revendication 1 ou la revendication 2, dans lequel le flux binaire vidéo compressé a été généré en utilisant une compression avec perte selon une norme de compression vidéo.

4. Système de diffusion de vidéo capable d'éliminer un grain de film numérique, le système comprenant un décodeur vidéo (300) qui comprend :

une interface d'entrée (310) pour recevoir un flux binaire codé (122) incluant un flux binaire vidéo compressé (252) et des métadonnées (212, 232), le flux binaire vidéo compressé présentant, encodée en son sein, une séquence d'images contenant du grain de film numérique, les métadonnées (212, 232) comprenant des métadonnées de modèle de grain de film (212) et des métadonnées d'élimination de grain de film (232), les métadonnées de modèle de grain de film (212) incluant un ou plusieurs paramètres correspondant au grain de film numérique ; et
un processeur (320, 340) configuré pour exécuter le procédé de l'une quelconque des revendications 1-3.

5. Système de diffusion de vidéo selon la revendication 4, comprenant en outre un encodeur vidéo qui comprend :

une interface de sortie pour délivrer en sortie le flux binaire codé à l'encodeur vidéo ; et
un module de compression vidéo pour générer le flux binaire vidéo compressé en utilisant une compression avec perte conformément à une norme de compression vidéo.

6. Support non transitoire lisible par machine, sur lequel est encodé un code de programme, dans lequel lorsque le code de programme est exécuté par une machine, la machine effectue des opérations comprenant le procédé de l'une quelconque des revendications 1-3.

100

102

105 — IMAGE GENERATION

107

110 — PRODUCTION

112

115 — POST-PRODUCTION

125

117

120 — CODING

122

130 — DECODING

132

135 — DISPLAY MANAGEMENT

137

140

FIG. 1

**FIG. 2**

200

**FIG. 3**

300

# FIG. 4

<u>400</u>

# FIG. 5

# FIG. 6

**FIG. 7**

**FIG. 8**

# FIG. 9

900

342 j-L
Spatial Film grain removed signal j-L

342j
Spatial Film grain removed signal j

342 j+L
Spatial Film grain Removed signal j+L

910
Temporal Film grain removal

342'
Temporal Film grain removed signal

FIG. 10

## REFERENCES CITED IN THE DESCRIPTION

**Patent documents cited in the description**

- US 63332332
- EP 22168812
- WO 2006057994 A2
- WO 2004105250 A2
- KR 20190098634 A

**Non-patent literature cited in the description**

- **MCCARTHY et al.** AHG9: Errata and editorial clarifications for AVC and HEVC film grain characteristics SEI message semantics. *20th JVET MEETING*